# EUROPEAN PATENT APPLICATION

(11) **EP 1 067 160 A1**
(43) Date of publication of application: **10.01.2001**
(21) Application number: 99202264.0
(22) Date of filing: 09.07.1999
(51) Int. Cl.: C09D 189/00

(54) **Proteinaceous coating**

(71) Applicant: Coöperatieve Verkoop- en Productievereniging van Aardappelmeel en Derivaten 'AVEBE' B.A., NL-9641 JA Veendam (NL)
(72) Inventor: The designation of the inventor has not yet been filed
(74) Representative: Ottevangers, Sietse Ulbe

(57) **Abstract**

The invention relates to coatings to protect surfaces against the undesired effects of deposits or contamination, such as graffiti, algae, moss or fungal growth or other environmental contamination. The invention provides a surface coating comprising a proteinaceous substance or derivatives thereof, capable of protecting surfaces against the undesired effects of deposits or contamination as varied as scrawl or graffiti, algae or fungal growth, brines, or other environmental contamination

## Description

The invention relates to coatings to protect surfaces against the undesired effects of deposits or contamination, such as graffiti, algae, moss or fungal growth or other environmental contamination.

Keeping surfaces clean these days often requires special attention. Many surfaces exposed to the environment are continuously at risk of being contaminated by undesired deposits, such as soot, grease, traffic dust, pollution, accidental stains, etc. Wilful contamination of a surface often is seen in the form of graffiti or scrawl on walls, doors, pillars, windows, roofs and other surfaces of buildings. Also, growth of algae, moss or fungi on surfaces is in many cases undesired. Especially surfaces under damp or wet conditions, such as north- or east exposed surfaces, or surfaces in bathroom or kitchen are susceptible to algae, moss or fungal growth. Algae or fungi or symbiotic populations of algae and fungi occur particularly on surfaces painted with water based paint. Underwater surfaces, such as on docks or ships, in particular are prone to algae growth.

Furthermore, packing material, such as wrapping paper or carton, pallets, wood chips or organic fibers, is often treated with fungicide to prevent fungal growth, especially on its surface, for example due to damp conditions that are seen during transport over seas, or transport under other circumstances that promote fungal growth.

Above surfaces need protection against such undesired contamination, yet other surfaces need only be partly protected or masked, e.g. in those case where paint or lacquer patterns or pictures need to be applied, requiring masking only part of the (irregular) surface with a coating, after which a paint or lacquer is applied to the uncoated part. The masking coating is removed when the desired pattern or picture has been applied.

Several surface coatings exist that serve to protect a surface under above mentioned circumstances. The application of permanent coatings is well known in the case of protection against graffiti. Often, such coatings comprise polyurethane, epoxy, or combinations thereof. Disadvantages of permanent surface coatings is that they are often clearly visible, that it is often required to clean the surface thoroughly before applying it, and that the graffiti needs to be removed by applying, often harsh, chemical solvents.

In contrast to permanent coatings, self-sacrificing coating systems exist, that are removed together with the contamination. Several self-sacrificing systems exist, for example several based on a copolymer, which however need to be removed with a corresponding chemical solvent, several based on an acrylate dispersion, which need to be removed with, often harsh, alkaline solvents, and several based on polysaccharide (see for example EP 0365 584 B1) which have the advantage that they can be removed with water, making them however less suitable for outdoor use. In general, self-sacrificing systems last only for a short time on a surface and need to be re-applied frequently.

Furthermore, semi-permanent coating systems are known which are in general a combination of a first layer of a permanent coating as above, combined with a top layer of a self-sacrificing system.

For antifungal treatment of packing material, said material is often sprayed with a more or less dense coating comprising a fungicide. However, clearly due to the toxicity of a fungicide, treatment with fungicides is at most times undesired, especially when transporting edible goods or products that are retailed directly.

It is an object of the present invention to provide an alternative coating system that preferably avoids most, if not all, of the disadvantages of the coating systems mentioned above.

The invention provides a surface coating comprising a proteinaceous substance or derivatives thereof, capable of protecting surfaces against the undesired effects of deposits or contamination as varied as scrawl or graffiti, algae, moss or fungal growth, brines, or other contamination. In a preferred embodiment, said proteinaceous substance comprises a mixture of a relatively elastic protein and a relatively viscous protein. Elasticity and viscosity are preferred to provide superior coating characteristics. In a preferred embodiment, said proteins are capable of forming multimeric complexes to further enhance the coating capacity of the proteinaceous substance. Preferred proteinaceous substances can be found among animal proteins such as collagen and/or gelatin, or among plant proteins such as storage proteins. Recombinant proteins have the advantage that they can specifically be designed for inclusion in a coating for disticnt purposes, however, have the disadvantage of price. In a most preferred embodiment, the invention provides a surface coating comprising gluten. Gluten are in general relatively water-insoluble proteins from for example wheat and other edible grasses, comprising in general a mixture of two proteins (each of which are suitable for use in a coating as provided by the invention): glutenins and gliadins, which contain in general 30-50% glutamine (Q) and 10-25% proline (P). Glutenins are of high molecular weight, comprising from 500-1000 amino acid molecules, covalently bound head-to-tail by disulfide bridges, forming multimeric complexes. Glutenins are in general responsible for the elasticity and extensibility of the gluten. The gliadines are of lower molecular weight, comprising from 250 to 600 amino acids, are monomeric, and are in general responsible for the viscosity of the gluten.

Advantages of a proteinaceous coating is that it is in essence bio-degradable, it is not toxic for man, animals plants and environment, cannot or only little burn, and is a renewable source being a natural product. Applying a proteinaceous coating results in a relatively elastic film, due to the presence of elastic protein, while it can easily be applied due to the viscosity generated by a viscous protein. Furthermore, the relative water-insolubility of a proteinaceous substance allows outdoor use. The proteinaceous film can furthermore simply be removed with water despite its relative water-insolubility, e.g. by applying a high-pressure sprayer, without having to resort to chemical solvents or other corrosive or abrasive techniques, and less expensive over existing coatings.

In a preferred embodiment, the invention provides a surface coating comprising gluten wherein said gluten is derived from wheat, or other gluten (derivatives) easily obtainable in the field. Preferably, said gluten or derivatives thereof are dispersed in a fluid that easily can be applied to the specific surface to be treated; thickness and other characteristics of such a fluid can easily be changed to accommodate diverse needs related to diverse surfaces.

Preferred is a surface coating according to the invention wherein said proteinaceous substance or derivatives thereof are dispersed in a fluid comprising at least a crosslinking agent, or a matrix forming agent such as polyvinylalcohol, preferably in a range from 0.5 to 20, more preferably 1 to 10, most preferably 2 to 8% (crosslinking) agent. Crosslinking agents are well known in the art. Crosslinking provides a coating according to the invention with a better resistance to water, at least to cold water, whereby said coating as provided by the invention is better resistant to weather influences such as rain and sleet, and subsequent drying. Removing it simply requires the use of warm or hot water.

A surface coating according to the invention can be applied on a great variety of surfaces, for example wherein said surface is a mineral, such as brickwork or masonry, concrete, plaster, stone, glass; a metal such as iron or steel, aluminium, copper; a plastic such as (synthetic) rubber, polymethylmetacrylate, polycarbonate, polyurethane, epoxy, polyvinylchloride, polypropylene, ureumformaldehyde, polyesters or wood, including painted wood. Foreseen applications are use as biodegradable coating or as active ingredient of an other protective system on food- and feed products to avoid (effects of) contamination and or pollution. Use as a biodegradable coating or active ingredient of an other protective system on walls, roofs, floors, (outside) furniture, fences, screens to avoid the build up or to remove the green film containing algae and other organisms. Use as a biodegradable coating or as an active or passive ingredient of an other protective system e.g. for all types of packaging materials e.g. wood materials and pallets. Use as a solid component added to a matrix or to a coating as an active or passive ingredient, as part of an other protective system consisting of; wood or based on wood, a synthetic material or based on a synthetic material, natural polymers or based natural polymers, concrete or based on concrete, clay or based on clay. Use as an additive to water containing systems to prevent or remove the green film or haze. Use as herbicide to prevent or inhibit or destroy plant growth. Use as fungicide. Use as pesticide. Use for treatment of thatched or tiled roofs and such, to avoid and/or remove primarily green films containing algae, fungi, moss and such, thereby protecting the roof from the deteriorating effects of these growths.

Painted surfaces in general are advantageously treated with a surface coating according to the invention to protect them against contamination or the undesired effects thereof. In particular, the invention provides a surface coating protecting surfaces against graffiti or algae or fungi growth. Furthermore, the invention provides use of a surface coating as provided by the invention as masking coating. The invention furthermore provides a method to protect a surface against the undesired effect of a contamination on said surface comprising applying a coating comprising gluten or derivatives thereof to said surface, optionally, when so desired to remove a contamination, further comprising removing said contamination from said surface by removing said coating, e.g. by applying water, for example under high pressure. Preferably, a coating as provided by the invention is used in a method according to the invention to protect a surface against the undesired effect of a contamination on said surface.

In addition, the invention provides a method for applying a lacquer or paint pattern or picture on a surface comprising masking at least a part of said surface with a coating according to the invention further comprising applying lacquer or paint to, preferably, an unmasked part of said surface. A coating as provided by the invention is thus used in a method to mask or protect parts of a surface that thereafter is sprayed or otherwise treated with lacquer or paint in order to provide said surface with a picture or pattern. The masking coating is removed or washed off, for example by applying water with sufficient pressure, preferably when the paint or lacquer forming the desired pattern or picture has sufficiently set.

The invention is further explained in the detailed description without limiting the invention thereto.

### Detailed description.

A coating as provided by the invention may for example contain the following components:
proteinaceous substance such as wheat protein thickener
weakening agent
preservative
anti foaming agent

The thickener may be selected in the range of wheat,- or potato,- or corn starch. Thickeners like guar gum, xanthaan gum, locust bean gum, methyl-cellulose and derivatives thereof or carboxymethylcellulose and CMC derivatives can also be used. Weakening agents can be chosen out of the group of alkane-glycolen, glycerol, sorbitol, mono and or disacharrides, or others known in the art. To preserve the dispersion a preservative may be used. It can for example be chosen from the group organic acids from c-1 to c-4, sorbic acid, benzoic acid or combinations thereof. To prevent foaming an anti-foaming agent can be used. All the components may be dissolved or dispersed in a suitable fluid such as water to be applied as coating or spray.

A base suspension contains for example a protein, such as gluten, a preservative, such as propionic acid, and water. For preparation of a base suspension based on gluten the gluten is dispersed in water slowly and distributed finely while stirred continuously with an overhead stirring device. After addition of the gluten to the water the suspension is heated during stirring with an overhead stirring device to de aerate the suspension and then stirred continuously for a suitable time. The base suspension is thus obtained. Additives can be added to the water both before and after the proteinaceous substance. If desired the additives can be mixed with the substance before the substance is dispersed.

If so desired a coating suspension as provided by the invention contains an additive, chosen from the group consisting of thickeners, plasticizers, acids, proteins, hydrofobic substances or combinations thereof. Stability of a suspension can be further improved by adding additives such as thickeners, acids proteins or combinations thereof. The addition of acids can likewise improve the stability and the rheological behaviour of the suspension. Such acids can be selected from the group consisting of inorganic acids such as hydrochloric acid, phosphoric acid, or organic acids such as lactic acid, propionic acid, ascorbic acid, citric acid or combinations thereof. Thickeners are likewise suitable for influencing the stability and the rheological behaviour of the suspension. The thickener is preferably selected from the group consisting of modified cellulose, such as carboxymethyl cellulose (further referred to as CMC), or from other modified or non-modified polysaccharides such as locust bean gum, guar gum, gum arabic, xanthan gum, alginate, starch or combinations thereof. Plastisizers are used to make the coatings flexible. The plastisizer can be chosen for instance from the group consisting of fatty acids, fatty acid derivates, phthalates, sebacates, high-molecular alcohols, triethanolamine, lactamides, phospholipids, mono-, di-, and oligosacharides, acids, polyoles or derivates thereof such as polyethylene glycol, polyethylene glycol esters, propylene glycol, glycerol, diglycerol, 1,2,6-hexanetriole, sorbitol, mannitol, saccharose, mono- and di-glycerides or combinatins thereof. Other samples can be found in Giam et al., J. of Food Prot. 50(9), 769-782 (1987). In a preferred embodiment the plastisizer is a food compatible and/or degradable substance such as glycerol, and this is added preferably in a concentration between 0 and 45% (v/w). more preferably in a concentration between 5 and 30%.

Hydrophobic substances are used to reduce the moisture permeability of the foils or coatings. They are chosen for instance from oils, fats, waxes, emulsifiers or combinations thereof.

### Examples

### Example 1

With laboratory trials concerning a filter-paper test the different components of a coating dispersion were screened on their influence on algae growth. The protein derivative inhibited both the growth of algae on the filter and on the remaining part of the agarmedium after inoculation of the filter with algae. The inhibiting effect of propionic acid was limited to the filter only: the non covered part of the agarmedium turned green.

### Example 2

Different trials of surface treatment of concrete tiles on the factory's premises with the product applied by paint brush or paint roller on the 1st of October 1998 changed the green film within 1 week. The original concrete colour came back. The effect remained for several months.

### Example 3

Spraying the product on a concrete surface in February 1999 gave comparable effects with the October 1998 trials (see 2). Different dosages were applied and the results were comparable with those from earlier tests at the same dosage and place. Smaller dosages gave a limited effect.

### Example 4

Spraying the coating on aluminium covered with a green film, gave good and comparable effects as with earlier tests (2+3): The green film disappeared and after several weeks a dried dark coloured debris was remaining. This could be removed by hand rather easily.

### Example 5

Treating a vertical concrete wall on the factory's premises in October 1998 with the coating destroyed the green film and the original colour of the concrete came back and the algae did not come back until at least July 1999.

### Example 6

Trials with treatment of a thatched roof of a tool shed in an enclosed garden in the summer of 1999 to remove the green film were successful.

### Example 7

In 1998 a wooden surface in an enclosed garden was treated with a coating of the vegetable protein by writing letters on said surface with said coating. Afterwards the green film on the treated surface disappeared and at least till July 1999 the effect of the treatment has remained.

### Example 8

In 1999 a moss overgrown wooden sleeper in an enclosed garden, also polluted with a green film, was treated with the product. The green film disappeared and the moss turned yellow, dried out and was easily removed.

### Example 9

On May 24, 1999 a wooden fence in an enclosed garden polluted with (crustaceous) lichen (esp. yellow and brown coloured) was treated with the a surface coating as provided by the invention. In June the organisms were discoloured, when compared with those on the untreated parts of the fence, and easily removed.

### Example 10

Treatment of bricks of a building with a gluten coating. The green shield/film disappeared. After drying the parts which remained of the green film and coating could be removed by mechanical force rather easily. After removal, a green film developed again.

### Example 11

Treatment of moss on a roof with the product turned the green moss yellow. Examination under a microscope learned that no trace of chlorophyll was left. Maybe the protein is absorbed by this organism (and algae) and in the cell blocks the formation of chlorophyll.

### Example 12

Growth oss, growing in a lawn between grass was blocked by the product. The grass, which was thereby treated at the same time, was at first inhibited in its growth, but recovered after a while.

### Example 13

A coating as provided by the invention was applied to a part of a concrete wall. The following day, to said treated part and an untreated control part, graffiti was applied with a spray paint from a spray can (Histor spuitlak), which was left to dry for one day. The following day, the wall was cleaned by applying water under high pressure or by treating it with a brush and hot water. From the treated wall, graffiti was easily removed, whereas it was impossible to remove the graffiti from the untreated part.

### Example 14

A coating as provided by the invention was applied repeatedly to a part of a concrete wall. It was no problem to apply the coating repeatedly, every subsequent layer held well to the foregoing layer. To said multiple treated part and an untreated control part, graffiti was applied with a spray paint from a spray can (Histor spuitlak), which was left to dry for one day. The following day, the wall was cleaned by applying water under high pressure or by treating it with a brush and hot water. From the treated wall, graffiti was easily removed, whereas it was impossible to remove the graffiti from the untreated part, applying only one layer of coating was sufficient for protection against graffiti.

### Example 15

To further study the effect of a coating on the protection of a surface against graffiti, several types of graffiti (applied by spraycan "Flexa" acrylic lacquer; spraycan "Tectyl amber"; spraycan "Duplicolor" alkyd-resin lacquer, or waterproof felt-tip(pen) "Snowman" were applied to several types of surface (glass, natural stone, baked clay, concrete, steel, copper, aluminium, acrylic, fir wood, cedar wood, painted wood), treated with said coating or left untreated. After one day drying all types of graffiti were easily removed from all treated surfaces by simply brushing with water, whereas none of the untreated surfaces were satisfactorily cleaned.

### Example 16

A polyester surface of a boat was treated with a coating according to the invention. No algae growth was observed after 2 weeks.

## Claims

1. A surface coating comprising a proteinaceous substance.

2. A coating according to claim 1 wherein said proteinaceous substance comprises a mixture of a relatively elastic protein and a relatively viscous protein.

3. A coating according to claim 2 wherein said protein is capable of forming multimeric complexes.

4. A coating according to claim 2 or 3 wherein said relatively elastic protein comprises glutenin.

5. A coating according to claim 2 or 3 wherein said relatively viscous protein comprises gliadin.

6. A coating according to anyone of claims 1 to 5 wherein said proteinaceous substance at least comprises gluten.

7. A coating according to claim 6 wherein said gluten is derived from wheat.

8. A surface coating according to anyone of claims 1 to 7 wherein said proteinaceous substance or derivative thereof is dispersed.

9. A coating according to claim 8 wherein said proteinaceous substance or derivative thereof is dispersed in a fluid comprising at least a cross-linking or matrix forming agent.

10. A coating according to claim 9 wherein said cross-linking agent allows multimeric complex formation.

11. A coating according to anyone of claims 1 to 10 wherein said surface is mineral, metal, plastic or wood.

12. A coating according to anyone of claims 1 to 11 for protecting surfaces against graffiti.

13. A coating according to anyone of claims 1 to 12 for protecting surfaces against algae, moss or fungi growth.

14. A method to protect a surface against the undesired effect of a contamination on said surface comprising applying a coating comprising a proteinaceous substance or derivative thereof to said surface.

15. A method according to claim 14 further comprising removing said contamination from said surface by removing said coating.

16. A method according claim 14 or 15 wherein said coating comprises a coating according to any one of claims 1 to 13.

17. Use of a coating according to anyone of claims 1 to 13 to protect a surface against the undesired effect of a contamination on said surface.

18. Use of a surface coating according to anyone of claims 1 to 13 to clean a surface.

19. Use of a surface coating according to anyone of claims 1 to 11 as masking coating.

20. A method for applying a lacquer or paint pattern or picture on a surface comprising masking at least a part of said surface with a coating according to anyone of claims 1 to 11 further comprising applying lacquer or paint to said surface.

21. A method according to claim 20 further comprising washing off said coating.
